# EUROPÄISCHE PATENTSCHRIFT

(11) **EP 1 685 187 B1**
(45) Veröffentlichungstag und Bekanntmachung des Hinweises auf die Patenterteilung: **25.07.2007**
(21) Anmeldenummer: 04790185.5
(22) Anmeldetag: 08.10.2004
(51) Int. Cl.: C08J 5/18

(54) **VERFAHREN ZUR HERSTELLUNG VON PET-FOLIEN**
METHOD FOR PRODUCING PET FILMS
PROCEDE DE FABRICATION DE FILMS PET

(30) Priorität: 21.11.2003 DE 10354732
(43) Veröffentlichungstag der Anmeldung: 02.08.2006
(73) Patentinhaber: Lurgi Zimmer GmbH, 60295 Frankfurt am Main (DE)
(72) Erfinder: EHRHARDT, Werner, 63546 Hammersbach (DE)
(74) Vertreter: Luderschmidt, Schüler & Partner
(86) Internationale Anmeldenummer: PCT/EP2004/011231
(87) Internationale Veröffentlichungsnummer: WO 2005/052039

(56) Entgegenhaltungen:
- EP-A- 0 532 943
- US-A- 4 421 887
- US-A- 4 568 616

## Beschreibung

Die vorliegende Erfindung betrifft Verfahren zur Herstellung von PET-Folien sowie hierdurch erhältliche Folien.

Polyethylenterephthalat ist ein allgemein bekannter Kunststoff, der vielfältig eingesetzt wird. Zur Verbesserung verschiedener Eigenschaften werden zur Herstellung dieser Kunststoffe unter anderem Verzweiger eingesetzt. Es handelt sich dabei um tri- oder tetrafunktionellen Carbonsäuren, Alkohole oder deren Derivate wie beispielsweise Trimellithsäure oder Trimethylolpropan. Bislang werden sie bevorzugt für Faser- und Flaschenpolyester eingesetzt, um z.B. höhere Schmelzefestigkeiten, höhere Festigkeiten und besseres Anfärbeverhalten zu erzielen.

Die Druckschrift DE 1720235 beschreibt die Herstellung von Copolyesterfasern mit erhöhter Festigkeit, Pillingresistenz und Anfärbbarkeit, wobei die Verbesserungen insbesondere auf den gemeinsamen Einsatz von Bisphenol-A-diglykolethern und Pentaerythrit zurückgeführt werden. Dabei wird Pentaerythrit in Mengen von 52-151 ppm eingesetzt.

In der US Druckschrift 4,113,704 werden für PET-Fasem verschiedene Verzweiger eingesetzt, mit denen erhebliche Verbesserungen bezüglich Festigkeit und Aufwickelgeschwindigkeit erzielt werden. Für Pentaerythrit werden Mengen von 66-660 ppm genannt.

Die Druckschrift DE 19841375 offenbart die Herstellung einer gut anfärbbaren Copolyesterfaser. Dort wird eine Kombination aus Carboxyalkylphosphonsäuren, Polyalkylenglykolen und Pentaerythrit vorgeschlagen, um die Verarbeitungseigenschaften und die Anfärbbarkeit zu verbessern. Pentaerythrit wird dabei in Mengen von 60-260 ppm eingesetzt.

Zur Herstellung von Getränkeflaschen durch Streckblasen oder Extrusionsblasen wird in DE 4125167 ein geeignetes modifiziertes Copolyethylenterephthalat vorgeschlagen, in dem neben den Comonomeren Isophthalsäure und Diethylenglykol Tri- oder Tetrahydroxyalkaneinheiten zur Verbesserung der Schmelzefestigkeit eingesetzt werden. Die Mengen betragen 300-2500 ppm, Pentaerythrit wird in den Beispielen genannt.

Die Druckschrift WO 93/23449 offenbart eine Beschleunigung des Festphasenpolykondensationsschrittes bei der Flaschenherstellung dadurch, dass u. a. 50-570 ppm Pentaerythrit zugeben werden.

Des weiteren sind Folien, die unter Verwendung von Polyethylenterephthalat hergestellt werden, ebenfalls seit langem bekannt und werden in großen Mengen eingesetzt. So beschreibt beispielsweise die Druckschrift US 2,823,421 ein Verfahren zur Herstellung von PET-Folien. Eine Übersicht wird in Encyclopedia of Polymer Science and Engineering Bd. 12, 2. Auflage, Seiten 195-210 dargelegt.

Die DE 1944239 beinhaltet die Herstellung von praktisch farblosen Photo- und Kinofilmen mittels eines Zinkkatalysators und der Zugabe von mindestens trifunktionellen Verbindungen. Für den Einsatz von Pentaerythrit werden 1920 ppm genannt.

In der DE 2132074 wird die Verbesserung eines aufwendigen Verfahrens zur Herstellung von PET-Filmen vorgeschlagen, die den Zusatz von Pentaerythrit zu einem festen PET-Vorkondensationsprodukt vorsieht, das in einem Extruder weiter polykondensiert wird, um Filme mit den gewünschten Eigenschaften zu erhalten. Die als notwendig erachtete Mengen von Pentaerythrit sind mit 4500-10000 ppm sehr hoch. Nachteilig an diesen Verfahren sind der hohe Aufwand sowie die hiermit verbundenen Kosten. W.J. Hennessy und A.L. Spatorico haben den Einfluß von 5 und 15 ppm Pentaerythrit auf das Verhalten von PET-Filmen untersucht (Polymer Engineering and Science, 19/6, 462-467 (1979)). Eine Zugabe von Pentaerythrit in dieser Größenordnung ist danach praktisch ohne Bedeutung.

Die zuvor beschriebenen Verfahren zur Herstellung werden teilweise kommerziell in gro-ßem Maßstab ausgeführt. Um die Herstellungskosten möglichst gering zu halten, besteht daher das dauerhafte Bedürfnis, die Herstellungsgeschwindigkeit dieser Folien zu erhöhen.

EP 0 532 943 A1 offenbart u.a Schrumpffolien auf Polyesterbasis, wobei die Diolkomponente im Wesentlichen aus Ethylenglykol und einem Ethylenacidaddukt einer Bisphenolverbindung besteht. Die Folien weisen einen verbesserten Schrumpf auf. Es können übliche Verzweiger eingesetzt werden.

US-A-4568616 beschäftigt sich mit chemisch modifiziertem Polyester, wobei zunächst vernetzte Polymerpartikel (funktionalisierte Vernetzer) hergestellt werden, welche wiederum zur Modifikation des Polyesters in der Schmelze dienen.

US-A-4421887 offenbart den Zusatz von Esteradditiven bei der Herstellung von biaxial orientierten Polyesterfolien.

In Anbetracht des Standes der Technik war es nun Aufgabe der vorliegenden Erfindung, ein Verfahren zur Herstellung von PET-Folien zur Verfügung zu stellen, mit dem Folien mit einer besonders hohen Geschwindigkeit hergestellt werden können.

Des weiteren war es mithin Aufgabe der vorliegenden Erfindung, Verfahren anzugeben, die besonders kostengünstig und effizient durchgeführt werden können. Hierbei sollte das Verfahren unter Verwendung von kommerziell erhältlichen, an sich bekannten Anlagen durchgeführt werden können.

Darüber hinaus bestand die Aufgabe, ein Verfahren anzugeben, welches in großem Maßstab ausgeführt werden kann. So sollte insbesondere die Fehlerquote, gemessen an der hohen Herstellgeschwindigkeit, besonders gering sein.

Weiterhin sollte das Verfahren einfach an vielfältige Anforderungen angepasst werden können. So sollten die durch das Verfahren erhältlichen Folien ohne großen Aufwand an die bestehende Bedürfnisse angepasst werden können. Insbesondere sollten die Folien im wesentlichen ähnliche oder bessere mechanische, optische und elektrische Eigenschaften aufweisen, wie Folien, die mit bekannten Methoden erhalten wurden.

Gelöst werden diese sowie weitere nicht explizit genannten Aufgaben, die jedoch aus den hierin einleitend diskutierten Zusammenhängen ohne weiteres ableitbar oder erschließbar sind, durch ein Verfahren zur Herstellung von PET-Folien mit allen Merkmalen des Patentanspruchs 1. Zweckmäßige Abwandlungen des erfindungsgemäßen Verfahrens werden in den auf Anspruch 1 rückbezogenen Unteransprüchen unter Schutz gestellt.

Hinsichtlich einer PET-Folie liefert der Anspruch 7 eine Lösung der zugrunde liegenden Aufgabe.

Dadurch, dass zur Herstellung des sich in der Schmelze befindlichen Polyethylenterephthalats ein Verzweigungsmittel in einer Konzentration von 50 bis 300 ppm, bezogen auf das Gesamtgewicht des in der Schmelze enthaltenen Polyethylenterephthalats, eingesetzt wird, wobei das Verzweigungsmittel ein Alkohol mit mindestens 3 funktionellen Gruppen ist, gelingt es auf nicht ohne weiteres vorhersehbare Weise, Verfahren zur Herstellung von PET-Folien, bei dem man eine Polyethylenterephthalat -Schmelze auf eine Walze überführt und den erhaltenen Film longitudinal streckt, wobei man eine Schmelze verarbeitet, die aus Polyethylenterephthalathomopolymer oder -copolymer besteht, wobei das Copolymer ausgewählt ist aus der Gruppe von Polyethylenterephthalaten, die neben den wiederkehrenden Einheiten des Polyethylentherephthalats noch bis zu 15 Mol-% bezogen auf alle Wiederholungseinheiten des Polyethylentherephthalats Wiederholungseinheiten des 1,3-Propandiol, 1,4-Butandiol, Diethylenglykol, Triethylenglykol, 1,4-Cyclohexandimethanol, Polyethylenglykol, Isophthalsäure und/oder Adipinsäure enthalten, zur Verfügung zu stellen, die mit einer hohen Geschwindigkeit durchgeführt werden können.

Zugleich besitzt das erfindungsgemäße Verfahren eine Reihe weiterer Vorteile. Hierzu gehören unter anderem:

Das erfindungsgemäße Verfahren ist auf einfache Art und Weise, großtechnisch und kostengünstig durchführbar.

Das Verfahren der vorliegenden Erfindung kann unter Verwendung von kommerziell erhältlichen, an sich bekannten Anlagen durchgeführt werden können.

Darüber hinaus kann das erfindungsgemäße Verfahren in großem Maßstab ausgeführt werden, wobei insbesondere die Fehlerquote, gemessen an der hohen Herstellgeschwindigkeit, besonders gering ist.

Weiterhin kann das erfindungsgemäße Verfahren einfach an vielfältige Anforderungen angepasst werden. So können die durch das Verfahren erhältlichen Folien ohne großen Aufwand an die bestehende Bedürfnisse angepasst werden. Insbesondere weisen die Folien im wesentlichen ähnliche oder bessere mechanische, optische und elektrische Eigenschaften auf, wie Folien, die mit bekannten Methoden erhalten wurden.

Erfindungsgemäß wird im vorliegenden Verfahren eine Schmelze verarbeitet, die Polyethylenterephthalat (PET) umfasst. Das Polyethylenterephthalat kann sowohl ein Homoals auch ein Copolymer sein. Als Copolymere kommen insbesondere solche in Frage, die neben den wiederkehrenden Einheiten des PET noch bis zu 15 Mol-% bezogen auf alle Wiederholungseinheiten des PET Wiederholungseinheiten üblicher Comonomere, wie z. B. 1,3-Propandiol, 1,4-Butandiol, Diethylenglykol, Triethylenglykol, 1,4-Cyclohexandimethanol, Polyethylenglykol, Isophthalsäure und/oder Adipinsäure, enthalten. Im Rahmen der vorliegenden Erfindung werden jedoch PET-Homopolymere bevorzugt.

Des weiteren umfasst das Polyethylenterephthalat 50 bis 300 ppm, vorzugsweise 60 bis 250 ppm, bezogen auf das Gesamtgewicht des in der Schmelze enthaltenden Polyethylenterephthalats, mindestens eines Verzweigungsmittels. Zu den erfindungsgemäßen Verzweigungsmitteln gehören tri- bis hexavalente Alkohole, wie Trimethylolpropan, Pentaerythrit, Dipentaerythrit, Glycerin. Das besonders bevorzugte Verzeigungsmittel ist Pentaerythrit.

Das in der Schmelze enthaltene Polyethylenterephthalat kann im allgemeinen eine intrinsische Viskosität im Bereich von 0,5-0,7, vorzugsweise 0,56-0,65 dL/g, gemessen in Phenol/Dichlorbenzol (6:4) bei 25 °C aufweisen (125 mg PET auf 25 ml Lösung).

Das erfindungsgemäße Polyethylenterephthalat kann übliche Mengen, vorzugsweise 0 bis 5 Gew.-%, vorzugsweise 0 bis 1 Gew.-% , jeweils bezogen auf das Gesamtgewicht der Schmelze weitere Zusatzstoffe als Beimischungen, wie Katalysatoren, Stabilisatoren, Antistatika, Antioxidantien, Flammschutzmittel, Farbstoffe, Farbstoffaufnahme-Modifikatoren, Lichtstabilisatoren, organische Phosphite, optische Aufheller und Mattierungsmittel enthalten.

Die Polyethylenterephthalat-Schmelze enthält vorzugsweise mindestens 70 Gew.-%, besonders bevorzugt mindestens 85 Gew.-% und ganz besonders bevorzugt mindestens 95 Gew.-%, bezogen auf das Gesamtgewicht der Schmelze, Polyethylenterephthalat.

Die Schmelzviskosität bei 280°C kann vorzugsweise im Bereich von 100 bis 600 Pa*s, besonders bevorzugt 200 bis 400 Pa*s liegen.

Die Herstellung der Polyethylenterephthalat umfassenden Schmelze kann durch jedes bekannte Verfahren erfolgen. Bevorzugt wird die Schmelze direkt vor der Weiterverarbeitung aus den Komponenten durch Polykondensationsreaktionen erzeugt. Die Herstellung des Polyesters erfolgt in an sich bekannter Weise kontinuierlich oder diskontinuierlich durch Umsetzung eines Diols mit einem Diester, wie beispielsweise Dimethylterephthalat, oder Terephthalsäure. Bevorzugt wird hierbei Terephthalsäure eingesetzt. Zunächst entsteht hierbei der Dicarbonsäurediester, der bei ansteigenden Temperaturen unter Verminderung des Druckes ein- oder mehrstufig polykondensiert wird, wobei Diol und Wasser freigesetzt werden.

Im allgemeinen werden für diese Umsetzung Katalysatoren eingesetzt, wie beispielsweise Verbindungen des Ti, Mn, Mg, Ca, Li, Co, und/oder Zn für die Umesterung; beispielsweise Verbindungen des Sb, Ti, Ge und/oder Sn für die Veresterung und beispielsweise Verbindungen des Sb, Ti, Pb, Ge, Zn und/oder Sn oder Zeolithe für die Polykondensation. Hierbei werden die Katalysatoren in üblichen Mengen, beispielsweise bis zu 500 ppm, bezogen auf den Polyester eingesetzt.

Das Vernetzungsmittel kann zu Beginn der Polykondensationsreaktion zugegeben werden. Des weiteren kann das Vernetzungsmittel auch zu einem späteren Zeitpunkt der Reaktionsmischung beigefügt werden. Gemäß einer bevorzugten Ausgestaltung der vorliegende Erfindung wird das Verzweigungsmittel erst zugesetzt, wenn 80 bis 98 %, besonders bevorzugt 92 bis 98 % des Veresterungsgemisches verestert sind. Dieser Veresterungsgrad (U) kann hierbei aus der Verseifungszahl (V_{Z}) und der Säurezahl (S_{Z}) des Reaktionsgemisches gemäß U=( V_{Z} - S_{z}) * 100/ V_{Z} berechnet werden. Die Verseifungszahl wird durch Verseifung mit Kaliumhydroxid in n-Propanol/Ethylenglykol (8:2) und potentiometrische Titration und die Säurezahl durch potentiometrische Titration in Dimethylformamid bestimmt.

Weitere Einzelheiten zur Herstellung der Polyethylenterephthalat umfassenden Schmelze sind unter anderem in Encyclopedia of Polymer Science and Engineering Bd. 12, 2. Auflage, Seiten 195-210, EP 0 921 145, US 4,113,704 und DE-OS 198 41 375 dargelegt

Die Herstellung von PET-Folien aus der Polyethylenterephthalat umfassenden Schmelze ist ebenfalls bekannt, wobei in diesem Zusammenhang unter anderem auf die Druckschriften Encyclopedia of Polymer Science and Engineering Bd. 12, 2. Auflage, Seiten 195-210 und US 2,823,421 verwiesen wird.

Üblichkann die Polyethylenterephthalat umfassende Schmelze bei einer Temperatur im Bereich von 270 bis 310 °C durch eine Düse auf eine Walze extrudiert werden, die im allgemeinen eine Temperatur im Bereich von 60°C bis 80°C aufweisen kann. Vielfach entsteht hierbei ein Film aus amorphem Polyethylenterephthalat.

Der Kristallinitätsgrad des Films unmittelbar nach Verlassen der ersten Walze, d.h. vor dem Strecken der Folie, ist im allgemeinen kleiner als 5%, vorzugsweise kleiner oder gleich 1% und besonders kleiner oder gleich 0,5%.

Die Dicke des Film, der durch Überführen der Polyethylenterephthalat umfassenden Schmelze auf eine Walze erhalten wird, kann in einem weiten Bereich liegen, wobei dieser Wert von der beabsichtigten Anwendung der PET-Folie sowie den Verstreckungsfaktoren in longitudinaler und transversaler Richtung abhängig ist. Im allgemeinen liegt die Dicke des Films im Bereich von 3 bis 500 µm, vorzugsweise 6 bis 300 µm.

Die Geschwindigkeit der Walze, auf die die Polyethylenterephthalat umfassende Schmelze überführt wird, kann üblich im Bereich von 80 bis 140 m/min, vorzugsweise 90 bis 120 m/min liegen.

Anschließend wird der erhaltene Film erfindungsgemäß in longitudinaler Richtung, d.h., in Maschinenlaufrichtung gestreckt. Im allgemeinen wird der Film bei einer Temperatur von 75 bis 100°C, vorzugsweise 85 bis 90°C longitudinal gestreckt.

Der Faktor, um den der Film gestreckt wird, liegt vorzugsweise im Bereich von 2 bis 6, besonders bevorzugt 3 bis 5, abhängig von einer Einfach- oder Mehrfachverstreckung.

Vorzugsweise wird der Film, der durch Überführen der Polyethylenterephthalat umfassenden Schmelze auf eine Walze erhalten wurde, mit einer Geschwindigkeit im Bereich von 200 bis 600 m/min, besonders bevorzugt 270 m/min bis 400 m/min longitudinal gestreckt.

Nach diesem Schritt weist die Folie vorzugsweise einen Kristallinitätsgrad im Bereich von 10 bis 25%, insbesondere 15 bis 20% auf.

Die so erhaltene Folie kann beispielsweise zur Herstellung von Bändern für Verpackungen dienen.

Des weiteren kann die nach der longitudinalen Streckung erhaltene PET-Folie in einem weiteren Schritt transversal, d.h. quer zur Maschinenlaufrichtung, gestreckt werden.

Vorzugsweise liegt der Faktor, um den die PET-Folie transversal gestreckt wird, im Bereich von 2 bis 5, besonders bevorzugt 3 bis 4. Im allgemeinen wird der Film bei einer Temperatur von 90 bis 120°C, vorzugsweise 100 bis 120°C transversal gestreckt.

Nach dem Strecken in transversaler Richtung weist die PET-Folie vorzugsweise eine Kristallinität im Bereich von 20 bis 45%, insbesondere 30 bis 40% auf.

Die so erhaltene PET-Folie kann unter anderem als Verpackungsmaterial eingesetzt werden.

Des weiteren kann die Folie auch einem Wärmestabilisierungsschritt unterzogen werden, sodass die Folie bei Erwärmen auf Temperaturen auf 150°C oder auf 190°C nur einen geringen Schrumpf zeigt. Hierzu wird die transversal gestreckte PET-Folie für einige Sekunden auf Temperaturen im Bereich von 180°C bis 220°C erwärmt. Dadurch steigt die Kristallinität auf etwa 50 % an.

Die durch das Verfahren der vorliegenden Erfindung erhältlichen PET-Folien können auf sämtlichen Gebieten eingesetzt werden, in denen auch herkömmliche PET-Folien eingesetzt werden. So können aus den Folien Filme für Verpackungen, beispielsweise im Lebensmittelbereich und auf dem medizinischen Sektor, und Filme für die Fotographie und für die Datensicherung, beispielsweise Mikrofilme, Magnetbänder, Folien für Druckanwendungen, beispielsweise hot-stamping Folien hergestellt werden.

Die Dicke der durch das vorliegende Verfahren erhältlichen PET-Folien liegt im Allgemeinen im Bereich von 1 µm bis 350µm, wobei dieser Wert von der Anwendung abhängig ist. So beträgt beispielsweise die Dicke von PET-Folien zur Herstellung von Verpackungen 6 bis 250 µm, für Filme 50 µm bis 175 µm, für technische Filme und Mikrofilme 100 bis 200 µm, für die Isolierung von Motoren und Generatoren 250 bis 350 µm, wohingegen die Dicke von PET-Folien zur Herstellung von Kondensatoren im Bereich von 1 bis 5µm liegt.

## Patentansprüche

1. Verfahren zur Herstellung von PET-Folien, bei dem man eine Polyethylenterephthalat- Schmelze auf eine Walze überführt und den erhaltenen Film longitudinal streckt, wobei man eine Schmelze verarbeitet, die aus Polyethylenterephthalathomopolymer oder -copolymer besteht, wobei das Copolymer ausgewählt ist aus der Gruppe von Polyethylenterephthalaten, die neben den wiederkehrenden Einheiten des Polyethylentherephthalats noch bis zu 15 Mol-% bezogen auf alle Wiederholungseinheiten des Polyethylentherephthalats Wiederholungseinheiten des 1,3-Propandiol, 1,4-Butandiol, Diethylenglykol, Triethylenglykol, 1,4-Cyclohexandimethanol, Polyethylenglykol, Isophthalsäure und/oder Adipinsäure enthalten, **dadurch gekennzeichnet, dass** zur Herstellung des sich in der Schmelze befindlichen Polyethylenterephthalats ein Verzweigungsmittel in einer Konzentration von 50 bis 300 ppm, bezogen auf das Gesamtgewicht des in der Schmelze enthaltenen Polyethylenterephthalats, eingesetzt wird, wobei das Verzweigungsmittel ein Alkohol mit mindestens 3 funktionellen Gruppen ist.

2. Verfahren gemäß Anspruch 1, **dadurch gekennzeichnet, dass** der Alkohol Pentaerythrit ist.

3. Verfahren gemäß mindestens einem der vorhergehenden Ansprüche, **dadurch gekennzeichnet, dass** der Film, der durch Überführen der Polyethylenterephthalat-Schmelze auf eine Walze erhalten wurde, eine Dicke im Bereich von 3 bis 500 µm aufweist.

4. Verfahren gemäß mindestens einem der vorhergehenden Ansprüche, **dadurch gekennzeichnet, dass** die Walze, auf die Polyethylenterephthalat- Schmelze überführt, eine Geschwindigkeit im Bereich von 80 bis 140 m/min aufweist, besonders bevorzugt 90 bis 120 m/min.

5. Verfahren gemäß mindestens einem der vorhergehenden Ansprüche, **dadurch gekennzeichnet, dass** der Film, der durch Überführen der Polyethylenterephthalat-Schmelze auf eine Walze erhalten wurde, mit einer Geschwindigkeit im Bereich von 200 bis 600 m/min, besonders bevorzugt 270 bis 400 m/min longitudinal gestreckt wird.

6. Verfahren gemäß mindestens einem der vorhergehenden Ansprüche, **dadurch gekennzeichnet, dass** der Film, der durch Überführen der Polyethylenterephthalat-Schmelze auf eine Walze erhalten wurde, transversal gestreckt wird.

7. Film erhältlich nach einem der Verfahren 1 bis 6.

8. Film gemäß Anspruch 7, **dadurch gekennzeichnet, dass** der Film eine Dicke im Bereich von 1 bis 350 µm aufweist.

## Claims

1. A method for producing PET films, wherein a polyethylene terephthalate melt is transferred onto a roller and the obtained film is stretched longitudinally, wherein a melt is processed which comprises polyethylene terephthalate homopolymer or copolymer, wherein the copolymer is selected from the group of polyethylene terephthalates which, apart from the repeating units of the polyethylene terephthalate, also contain up to 15 mole %, related to all the repeating units of the polyethylene terephthalate, of repeating units of 1,3-propanediol, 1,4-butanediol, diethylene glycol, triethylene glycol, 1,4-cyclohexane dimethanol, polyethylene glycol, isophthalic acid and/or adipic acid, **characterised in that** a branching agent in a concentration of 50 to 300 ppm, related to the total weight of the polyethylene terephthalate contained in the melt, is used for the production of the polyethylene terephthalate present in the melt, wherein the branching agent is an alcohol with at least 3 functional groups.

2. The method according to claim 1, **characterised in that** the alcohol is pentaerythrite.

3. The method according to at least one of the preceding claims, **characterised in that** the film, which has been obtained by transferring the polyethylene terephthalate melt onto a roller, has a thickness in the range from 3 to 500 µm.

4. The method according to at least one of the preceding claims, **characterised in that** the roller, onto which the polyethylene terephthalate melt is transferred, has a speed in the range from 80 to 140 m/min, particularly preferably 90 to 120 m/min.

5. The method according to at least one of the preceding claims, **characterised in that** the film, which has been obtained by transferring the polyethylene terephthalate melt onto a roller, is stretched longitudinally at a rate in the range from 200 to 600 m/min, particularly preferably 270 to 400 m/min.

6. The method according to at least one of the preceding claims, **characterised in that** the film, which has been obtained by transferring the polyethylene terephthalate melt onto a roller, is stretched transversely.

7. The film obtainable according to any one of methods 1 to 6.

8. The film according to claim 7, **characterised in that** the film has a thickness in the range from 1 to 350 µm.

## Revendications

1. Procédé de fabrication de films PET dans lequel on conduit du téréphtalate d'éthylène fondu sur un rouleau et on étire le film obtenu dans le sens longitudinal où l'on traite la matière fondue qui consiste d'homopolymère où copolymère de téréphtalate d'éthylène où le copolymère est choisi dans le groupe des téréphtalates d'éthylène, qui en plus des unités répétées du téréphtalate d'éthylène contiennent encoure jusqu'à 15% en moles, par rapport à tous les unités répétées de téréphtalate d'éthylène, des unités répétées du 1,3-propandiol, 1,4-butandiol, diéthylène glycole, cyclohexane dimethanol, polyéthylène glycol, acide isophthalique et/où acide adipique, **caractérisé en ce que** l'on met en oeuvre, pour la fabrications du téréphtalate d'éthylène qui se trouve dans la matière fondue, un agent de ramification d'une concentration 50 à 300 ppm, par rapport au poids total du téréphtalate d'éthylène se trouvant dans la matière fondue et où l'agent de ramification est un alcool avec au moins trois groupes fonctionnels.

2. Procédé selon la revendication1, **caractérisé en ce que** l'alcool est le pentaérythrol.

3. Procédé selon au moins une des revendications précédentes **caractérisé en ce que** le film obtenu par la conduction du polytéréphtalate d'éthylène fondu sur un rouleau possède une épaisseur dan le domaine de 3 à 500 µm.

4. Procédé selon au moins une des revendications précédentes **caractérisé en ce que** le rouleau sur lequel on conduit le polytéréphtalate d'éthylène fondu présente une vitesse dans le domaine de 80 à 120 m/min de préférence particulière 90 à 120 m/min.

5. Procédé selon au moins une des revendications précédentes **caractérisé en ce que** le film obtenu par la conduite du polytéréphtalate d'éthylène fondu sur le rouleau est étiré avec un vitesse dans le domaine de 200 à 600 m/min. de préférence particulière 270 à 400 m/min dans le sens longitudinal.

6. Procédé selon au moins une des revendications précédentes **caractérisé en ce que** le film obtenu par la conduite du polytéréphtalate d'éthylène fondu est étiré dans le sens transversal.

7. Film productible par un procédé 1 à 6.

8. Film selon revendication 7 **caractérisé en ce que** le film présente un épaisseur dans le domaine de 1 à 350 µm.
